# EUROPEAN PATENT APPLICATION

(11) **EP 3 038 219 A1**
(43) Date of publication of application: **29.06.2016**
(21) Application number: 14200024.9
(22) Date of filing: 23.12.2014
(51) Int. Cl.: H02G 1/10, F03B 13/12

(54) **A method of managing a cable for an underwater turbine**

(71) Applicant: Openhydro IP Limited, Dublin 2 (IE)
(72) Inventor: Dunne, Paul, Dublin, 9 (IE); Cobbe, Mark, Co. Laois (IE); Ryder, Quentin, Co. Kerry (IE)
(74) Representative: O'Neill, Brian

(57) **Abstract**

The present invention provides a method of managing an electrical cable for an underwater electrical system, the method involving the connection of one end of the cable to the electrical system, the other end remaining free for later connection, positioning the electrical system in a body of water and depositing the entire cable into the body of water, with buoyancy connected to the cable to provide visibility and controllability to the cable, before retrieving the free end of the cable from the body of water for connection purposes.

## Description

### Field of the invention

The present invention is concerned with a method of managing a cable for an underwater turbine, in particular a hydroelectric turbine which is located at a site of high tidal flow, which method facilitates the establishing of a dry connection to a free end of the cable.

### Background of the invention

Renewable energy is now seen as a mainstream source of energy, in particular for the generation of electricity, primarily as a result of the widespread adoption of the now relatively mature technology of wind turbines. There are however many other forms of renewable energy, one of the most promising, predictable, and prolific being that of tidal energy, which may be harnessed by means of seabed mounted turbines or the like.

However, harnessing tidal energy does provide its own challenges, in particular with respect to the installation and maintenance of tidal power generators, for example hydroelectric turbines, which by the very nature of the operation of same must be located in relatively fast flowing tidal currents. In addition, in order to be economically viable these turbines must be built on a large scale. Essentially however these turbines must deliver power back to shore for eventual supply into the grid.

Due to both the relatively large electric currents generated by hydroelectric turbines, and the extremely harsh conditions under which the turbines and associated electrical cables are exposed, the electrical cable connecting turbines in an array and/or extending onshore from each turbine must be relatively large and robust. As a result of the diameter of the cable, which may be in the region of 100-500 mm, and given the length of cable involved, the weight of the cable is significant. The handling of the cable is therefore both a difficult and time-consuming operation, made even more difficult by the tidal conditions present at the sites where hydroelectric turbines are deployed. The cabling is also relatively inflexible and so the mishandling of same can quickly and easily result in kinking/knotting of the cable, thus rendering same permanently damaged and therefore requiring replacement.

There is a thus growing need for cabling solutions for tidal applications. Without the use of cost-prohibitive dynamic positioning vessels, high speed tidal sites present two primary issues, namely restricted time to execute offshore operations such as cable connections, and difficulty in maintaining accurate positioning of vessels during cable connection operations

Additionally there is a lack of cost effective, high-power, wet-mate connectors available on the market. Dry mate connectors are therefore the most cost-effective option. Connection of tidal turbines or related electrical componentry in a tidal stream using dry-mate connectors is therefore restricted to:
- Connection of the power transmission cable to the device on the surface immediately before installation of a device in a tidal stream; this is not a preferred solution as two relatively complex operations are still required in the one limited time period.
- Connection of a power transmission cable to the device in advance of the installation operation. After deployment the cable and end connector are brought to the surface in a tidal stream for subsequent connection to the grid.

It is therefore an object of the present invention to address the management of cabling for an underwater electrical system such as a tidal turbine.

### Summary of the invention

According to a first aspect of the present invention there is provided a method of managing an electrical cable for an underwater electrical system comprising;
connecting one end of the cable to the electrical system;
positioning the electrical system in a body of water;
depositing the entire cable into the body of water; and
retrieving an opposed free end of the cable from the body of water by means of a support vessel.

Preferably, the method comprises, in the step of depositing the cable into the body of water, positioning the cable downstream of the electrical system.

Preferably, the method comprises the step of establishing an electrical connection with the free end of the cable once retrieved from the body of water

Preferably, the method comprises establishing the electrical connection with a dry mate connector.

Preferably, the method comprises providing the cable with buoyancy along at least a portion of the length of the cable.

Preferably, the method comprises providing the cable with buoyancy along at least a portion of the length of the cable as the cable is being deposited into the body of water.

Preferably, the method comprises supporting the cable with a plurality of discrete buoyancy modules operable to provide the cable with buoyancy along at least a portion of the length of the cable. Preferably, the method comprises supporting the cable with a continuous buoyancy element operable to provide the cable with buoyancy along at least a portion of the length of the cable.

Preferably, the method comprises providing the buoyancy by inflating the buoyancy modules or buoyancy element.

Preferably, the method comprises the step of removing the buoyancy from the cable to enable the cable to sink.

Preferably, the method comprises releasing the buoyancy from the cable.

Preferably, the method comprises remotely releasing the buoyancy from the cable.

Preferably, the method comprises the step of retrieving the buoyancy from the body of water subsequent to release from the cable.

Preferably, the method comprises the step of tethering the buoyancy prior to being deposited into the body of water in order to facilitate retrieval of the buoyancy.

Preferably, the method comprises, in the step of positioning the electrical system in the body of water, locating the electrical system onto a deployment substrate in the body of water.

Preferably, the method comprises lowering the electrical system onto the deployment substrate from an installation vessel.

Preferably, the method comprises the step of feeding the cable into the body of water from the installation vessel.

According to a second aspect of the present invention there is provided an underwater electrical system comprising a base for supporting a hydroelectric turbine and/or one or more electrical components; an electrical cable connected at one end to the electrical system and having a free opposed end.

Preferably, the system comprises buoyancy operatively associable with the cable.

Preferably, the buoyancy comprises a plurality of discrete buoyancy modules and/or a continuous buoyancy element.

Preferably, the electrical system comprising a retrieval system connected to the opposed free end of the electrical cable.

Preferably, the retrieval system comprises ground tackle.

As used herein, the term "electrical system" is intended to mean an electrical system for use underwater, and in particular in a marine environment, and which may include a tidal turbine and/or one or more electrical components for managing and/or conditioning the generation of electricity from one or more of such turbines, and which electrical system may initially comprise only a base on which the turbine or electrical components are mountable and which base may serve as an electrical connection point or interface between the turbine/electrical system and an electrical cable.

As used herein, the term "downstream" is intended to mean a position downstream of a reference point in a body of water, by virtue of relative movement between that reference point, for example a vessel such as a deployment barge, and the body of water, whether that relative movement occurs as a result of movement of the vessel relative to the water, for example when the vessel is travelling across the body of water to a deployment site or the like, or as a result of the tidal movement of the water relative to the vessel, despite the possibility of the vessel being essentially stationary, for example when maintaining a position above a seabed deployment site.

### Brief description of the drawings

The present invention will now be described with reference to the accompanying drawings, in which:
Figure 1 illustrates a schematic representation of an underwater electrical system according to an embodiment of the present invention, in the initial stages of deployment;
Figure 2 illustrates the underwater electrical system of Figure 1, in which a turbine and base are being lowered towards the seabed;
Figure 3 illustrates the underwater electrical system of Figures 1 and 2, in which a cable forming part of the system is being lowered in a controlled manner onto the seabed and in which buoyancy previously connected to the cable is being retrieved;
Figure 4 illustrates the underwater electrical system when deposited on the seabed, in which ground tackle is being laid beyond and connected to a free end of the cable;

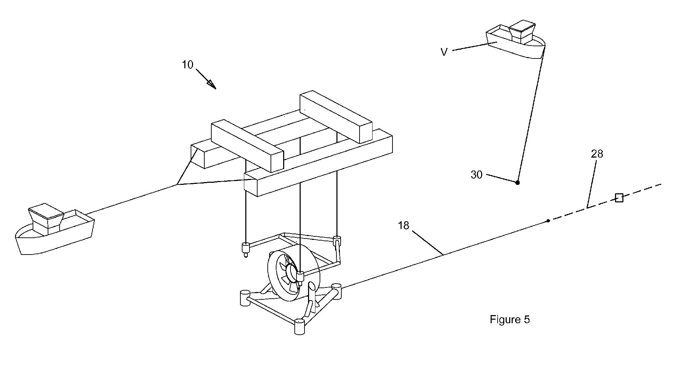

Figure 5 illustrates the underwater electrical system of Figures 1 and 2, in which a support vessel is initiating retrieval of the electrical cable from the seabed;
Figure 6 illustrates a schematic representation of a hydroelectric turbine array with which the cable management method of the present invention may be used; and
Figure 7 illustrates a base of the underwater electrical system according to the present invention, showing an electrical cable extending therefrom.

### Detailed description of the drawings

Referring now to the accompanying drawings there is illustrated a cable management method for an underwater electrical system generally indicated as 10, which method facilitates the controlled deployment of such an electrical system 10 at a tidal site.

In the preferred embodiment described and shown the electrical system 10 is in the form of a hydroelectric turbine system 10 comprising a base 12 which is preferably a gravity type base, supported on which is a turbine 14 which is adapted, in known fashion, to effect the generation of electricity in response to the tidal flow of water through the turbine 14. The system 10 is therefore adapted to be deployed on the seabed or other deployment substrate at a site of relatively high tidal flow, and preferably arranged in an array comprising multiple units in order to generate commercial scale levels of electricity. In deploying and commissioning an array of the systems 10 at such tidal sites, cable management becomes a major issue which can add significant cost and complexity to the operation. The system 10 and method of the present invention seek to address some of the issues associated with such cable management in the challenging conditions experienced at the deployment sites in question.

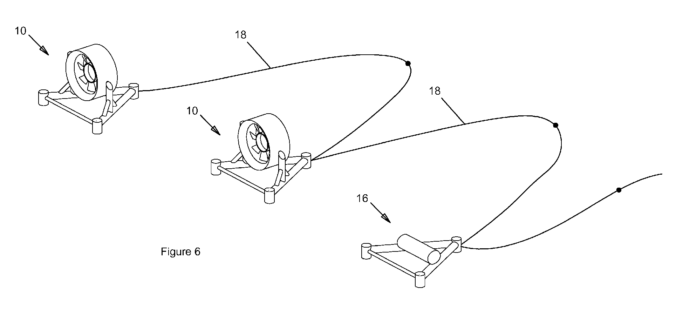

It will also be appreciated from the following description that the electrical system 10 of the present invention need not comprise the turbine 14, which could be replaced with one or more electrical components (not shown) for processing and/or conditioning electricity generated by other turbines 14 in an array. For example, referring to Figure 6, there is illustrated an array of the turbines 14 each mounted on a respective base 12, the turbines 14 being connected in a chain or series including a hub 16 which may be provided on and supported by one of the bases 12. The hub 16 may include one or more of the above mentioned processing and/or conditioning components such as to act as an underwater electrical substation, and from which hub 16 the generated electricity from each of the turbines 14 may be conditioned and transmitted ashore or other remote location for use.

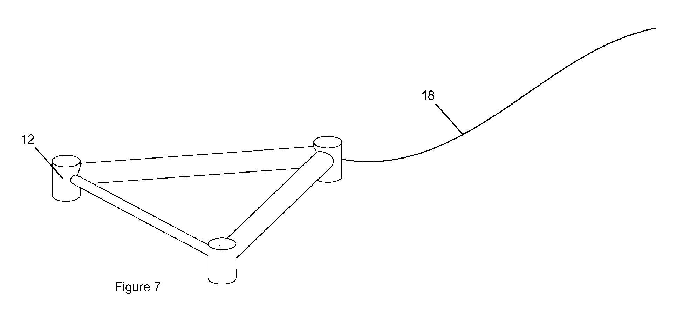

Figure 7 illustrates one of the bases 12 in the absence of either the turbine 14 or the hub 16, and to which the hub 16 or the turbine 14 could be mounted. Regardless of whether the turbine14 or the hub 16 is mounted to the base 12, the electrical system 10 further comprises an electrical cable 18, a first end 20 of which is connected directly or indirectly to the turbine 14 or hub 16, for example by means of suitable connections (not shown) on the base 12. The cable 18 additionally comprises an opposed free end 22 which is then used to connect the electrical system 10 into the above mentioned array, or if single system 10 is being deployed in isolation, to a dedicated cable (not shown) for transmitting the generated electricity ashore or to another remote location for use. Regardless of the particular arrangement of the system 10 in an array or otherwise, it is the laying and connection of the electrical cables 18 that gives rise to significant challenges, which are compounded by the harsh conditions present at the deployment sites in question. It is essential when laying and connecting the cable 18 that no bends, kinks or knots are introduced as these are likely to lead to damage requiring repair or replacement. A method of managing the cable 18 is therefore required.

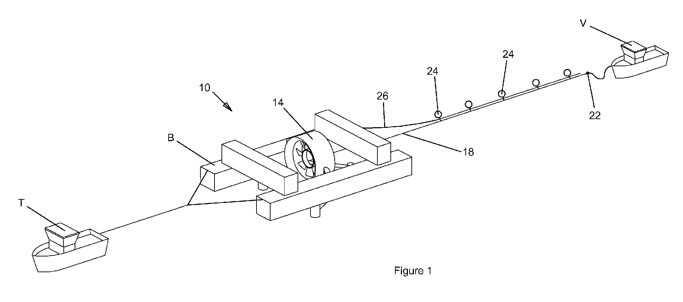

Thus referring now to Figure 1 there is illustrated the electrical system 10 of the present invention, comprising one of the bases 12 to which is mounted one of the turbines 14. The system 10 is mounted directly beneath a deployment barge B which is towed, in the embodiment illustrated, by a tug T, although the barge B may be provided with its own means of propulsion. The barge B is adapted to retain the electrical system 10 directly beneath the barge B while it is towed to the deployment site in question, and the barge B can then lower the electrical system 10, preferably by means of a number of winches and lowering lines L (not visible in Figure 1) onto the seabed. It should however be understood from the following description of the method of the invention that the electrical system 10 could be transported to the necessary deployment site by any other suitable vessel or combination of vessels (not shown), and once in position above said deployment site, may be lowered or otherwise positioned on the seabed by any other suitable means or method.

The electrical cable 18 forming part of the electrical system 10 is pre-connected to the electrical system 10 prior to towing the system 10 to the deployment site, and may be connected prior to or after the system 10 has been secured to the barge B or other transport and/or deployment vessel. Once connected to the system 10 the cable 18 is either deposited into the body of water prior to towing to the deployment site, or may be wound onto a suitable spool (not shown) or otherwise safely stored, which spool or other storage solution may be located on the barge B or another support vessel, for later deployment of the cable 18 into the body of water. For example the method may comprises transporting the system 10 to a deployment site with the cable 18 wound onto the above mentioned spool, and once at the site the cable 18 may then be deposited into the body of water for subsequent management as hereinafter described.

In the embodiment illustrated the cable 18 is deposited into the body of water before transporting the system 10 to the deployment site, but preferably with the barge B already in motion such that the cable 18 will then naturally extend downstream of the barge B with respect to the direction of travel to the deployment site. In this way the cable 18 remains in a substantially straight line and safely downstream of the barge B in order to avoid any damage thereto during transport of the system 10 to the deployment site. As a further measure to prevent tangling, knotting or other damage, the free end 22 of the cable 18 may be held, by any suitable means, by a support vessel V which will itself therefore remain in a downstream position of the barge B during the transport stage. The support vessel V can thus be used to maintain suitable tension in the cable 18 in order to avoid any bunching, knotting or other undesirable complications involving the cable 18. The support vessel V will follow the barge B at a fixed distance as the system 10 is transported to the deployment site. The support vessel V may include any suitable hardware for retaining the free end of the cable 22, and could for example include a winch (not shown) onto which the free end 22 of the cable 18 could be wound, although any other suitable alternative may be employed. It is preferable that tension 18 in the cable 18 can be monitored during this transport step. Too little tension will allow the cable 18, in particular the central portion between the barge B and vessel V, to sag downwardly leading to potential contact with the seabed, risking snagging or other damage. Equally too much tension could result in damage to the cable 18. By retaining the free end 22, using for example the vessel V, it is possible to prevent the cable 18 from sinking to a dangerous depth during transport.

In order to further improve the management of the cable 18 during the transport and deployment stages, buoyancy in the form of a plurality of discrete buoyancy modules 24 may be tethered or otherwise suitably secured to the electrical cable 18 at various intervals along the length thereof. These buoyancy modules 24 will ensure that the cable 18 remains on or just below the surface of the body of water as it is transported to the deployment site and while awaiting final deployment onto the seabed. This will again ensure that the cable does not partially or fully sink which could cause kinking, knotting, snagging or other undesirable complications, and allows good visibility of the position of the cable during the transport and/or deployment stages. If the cable 18 is deposited into the body of water prior to transport to the deployment site, it is preferable that the buoyancy modules 24 are secured to the cable 18 prior to transport in order to provide the above mentioned functionality during the transport stage. Alternatively if the cable 18 is held out of the body of water on a spool or the like during the transport to the deployment site, the buoyancy modules 24 could either be added to the cable 18 prior to storage, or could be added as the cable 18 is being deposited into the body of water at the deployment site. In a preferred embodiment the buoyancy modules are inflatable in order to provide the necessary buoyancy. The buoyancy modules 24 could therefore be connected to the cable 18 in a deflated state in order to facilitate storage on a spool or the like, and only inflated as the cable 18 is being deposited into the body of water. While the provision of buoyancy provides the same effect as the tensioning of the cable 18 by the vessel V, namely preventing the cable 18 from sinking towards the seabed during transport, and could therefore replace the vessel V, it is preferable that both buoyancy and tension and simultaneously utilised.

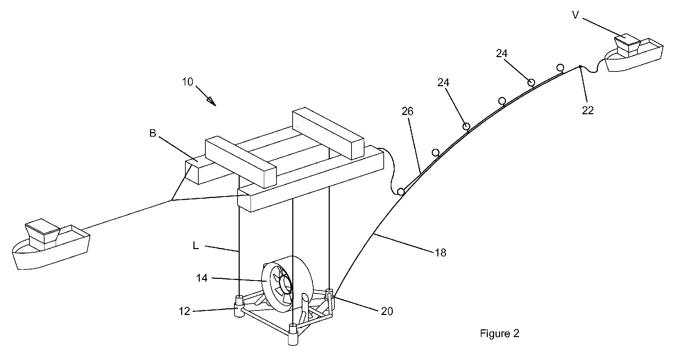

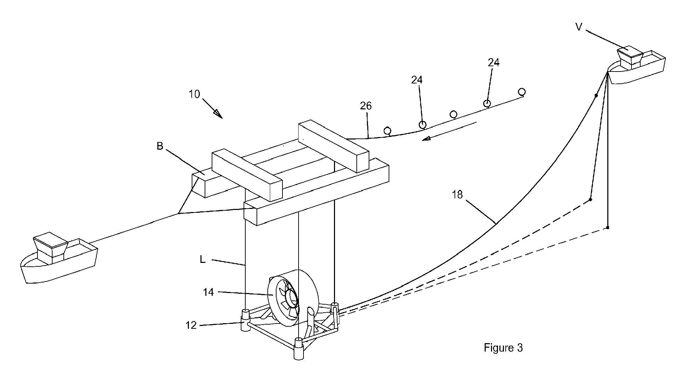

Referring now to Figure 2, once the barge B and electrical system 10 are located above the deployment site the electrical system 10 can then be lowered towards the seabed, which will act to draw at least a portion of the electrical cable 18 and the connected buoyancy modules 24 downwardly towards the seabed in a controlled manner, with the buoyancy modules 24 and optionally the support vessel V ensuring that tension is maintained in the cable 18 in order to again avoid any tangling, knotting, etc.. Once the base 12 is securely located on the seabed as illustrated in Figure 3, the buoyancy modules 24 are released from the cable 18, preferably by means of a suitable remote control release mechanism (not shown), allowing the buoyancy modules 24 to return to the surface. This will allow the continued controlled descent of the cable 18 towards the seabed. The buoyancy modules 24 are preferably tethered in series by means of a retrieval line 26 which may be fed from either the barge B, the support vessel V or some other vessel (not shown). Once all of the buoyancy modules 24 have been released from the electrical cable 18 they may then be retrieved to the barge B by drawing in the retrieval line 26.

At this point, and as illustrated in Figure 3, the free end 22 of the cable 18 is lowered towards the seabed from the support vessel V in order to complete the controlled deployment of the cable 18 onto the seabed, from where it can be retrieved as hereinafter described for connection into an array or the like.

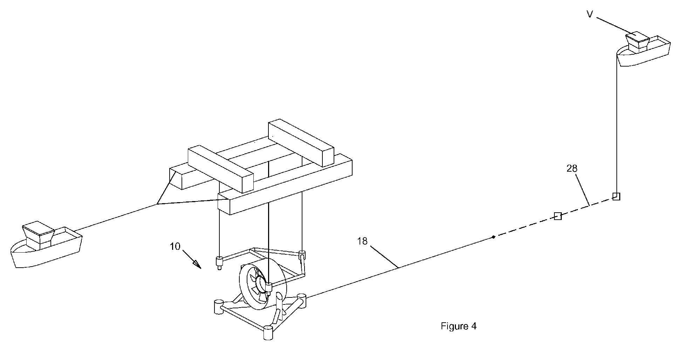

In order to facilitate the retrieval of the free end 22 of the cable 18 for connection purposes, it is preferable when lowering the free end 22 onto the seabed that some form of retrieval hardware (not shown) is provided to facilitate same. In the embodiment illustrated, as illustrated in Figure 4, this retrieval hardware is provided in the form of ground tackle 28 comprising one or more lengths of steel cable and/or chain tethered to the free end 22 by a suitable connection, and preferably but not essentially laid away from the electrical cable 18 and preferably in line therewith, and thus substantially in line with the direction of the prevailing tidal flow in order to prevent or minimise unwanted displacement of the ground tackle 28 by tidal forces. It may however be preferable, for example if there are two cables 18 extending from the system 10 to facilitate connection within an array, to lay the two cables 18 essentially in line with the direction of tidal flow but to lay the two lengths of ground tackle 28 divergent from one another in order to enable the cables 18 to be individually retrieved from the seabed using the ground tackle 28. The ground tackle 28 may also include additional components such as clump weights (not shown) which will provide a greater level of stability to the ground tackle 28.

As an alternative to the ground tackle 28 the retrieval hardware could comprise some form of buoy system (not shown) secured to the free end 22 of the cable 18, an acoustic or similar remote release system (not shown) which may be remotely triggered in order to release and raise a retrieval line (not shown) to the surface, or any other alternative means of marking and retrieving the cable 18 from the seabed.

Thus referring to Figure 6, when it is desired to connect the free end 22 of the cable 18, whether to an array or to another cable such as a transmission cable (not shown) or the like, the support vessel V or any other suitable vessel may be used to draw a hook such as a grapnel 30 along the seabed in the region of the ground tackle 28 and in a direction substantially transverse to direction in which both the cable 18 and ground tackle 28 are laid. In this way, the ground tackle 28 can be hooked and then retrieved upwardly onto the deck of the support vessel V, at which point a suitable connection may then be made with the free end 22, for example using a wet or dry mate connector (not shown) or the like. Once the connection has been made the free end 22 of the cable 18 may then be lowered back overboard and onto the seabed.

Thus it will be appreciated that the method of the present invention, wherein the cable 18 is deposited into the body of water and located in a position downstream of the electrical system 10, and optionally with the use of buoyancy as embodied by the buoyancy modules 24, the management of the electrical cable 18 is significantly improved in order to reduce the risk of kinking, knotting or otherwise damaging the electrical cable 18 during installation procedures.

It will also be appreciated that the buoyancy modules 24 could be replaced with any suitable functional alternative, for example a continuous length of inflatable or inflated tubing provided along at least a portion of the electrical cable 18 when located in the body of water.

## Claims

1. A method of managing an electrical cable for an underwater electrical system comprising;
connecting one end of the cable to the electrical system;
positioning the electrical system in a body of water;
depositing the entire cable into the body of water; and
retrieving an opposed free end of the cable from the body of water by means of a support vessel.

2. A method according to claim 1 comprising, in the step of depositing the cable into the body of water, positioning the cable downstream of the electrical system.

3. A method according to claim 1 or 2 comprising the step of establishing an electrical connection with the free end of the cable once retrieved from the body of water.

4. A method according to claim 3 comprising establishing the electrical connection with a dry mate connector.

5. A method according to any preceding claim comprising providing the cable with buoyancy along at least a portion of the length of the cable.

6. A method according to claim 5 comprising providing the cable with buoyancy along at least a portion of the length of the cable as the cable is being deposited into the body of water.

7. A method according to claim 5 or 6 comprising supporting the cable with a plurality of discrete buoyancy modules operable to provide the cable with buoyancy along at least a portion of the length of the cable.

8. A method according to any of claims 5 to 7 comprising supporting the cable with a continuous buoyancy element operable to provide the cable with buoyancy along at least a portion of the length of the cable.

9. A method according to claim 7 or 8 comprising providing the buoyancy by inflating the buoyancy modules or buoyancy element.

10. A method according to any of claims 5 to 9 comprising the step of removing the buoyancy from the cable to enable the cable to sink.

11. A method according to any of claims 5 to 10 comprising releasing the buoyancy from the cable.

12. A method according to claim 11 comprising remotely releasing the buoyancy from the cable.

13. A method according to claim 11 or 12 comprising the step of retrieving the buoyancy from the body of water subsequent to release from the cable.

14. A method according to claim 13 comprising the step of tethering the buoyancy prior to being deposited into the body of water in order to facilitate retrieval of the buoyancy.

15. A method according to any preceding claim comprising, in the step of positioning the electrical system in the body of water, locating the electrical system onto a deployment substrate in the body of water.

16. A method according to claim 15 comprising lowering the electrical system onto the deployment substrate from an installation vessel.

17. A method according to claim 16 comprising the step of feeding the cable into the body of water from the installation vessel.

18. An underwater electrical system comprising a base for supporting a hydroelectric turbine and/or one or more electrical components; an electrical cable connected at one end to the electrical system and having a free opposed end.

19. An underwater electrical system according to claim 18 comprising buoyancy operatively associable with the cable.

20. A hydroelectric turbine system according to claim 19 in which the buoyancy comprises a plurality of discrete buoyancy modules and/or a continuous buoyancy element.

21. An underwater electrical system according to any of claims 18 to 20 comprising a retrieval system connected to the opposed free end of the electrical cable.

22. An underwater electrical system according to claim 21 in which the retrieval system comprises ground tackle.
